# EUROPÄISCHE PATENTANMELDUNG

(11) **EP 4 067 411 A1**
(43) Veröffentlichungstag der Anmeldung: **05.10.2022**
(21) Anmeldenummer: 21165763.0
(22) Anmeldetag: 30.03.2021
(51) Int. Cl.: C08G 77/46, C08L 83/04

(54) **VERFAHREN ZUR HERSTELLUNG VON SIOC-VERKNÜPFTEN, LINEAREN POLYDIALKYLSILOXAN-POLYETHER-BLOCKCOPOLYMEREN UND IHRE VERWENDUNG**

(71) Anmelder: Evonik Operations GmbH, 45128 Essen (DE)
(72) Erfinder: REIBOLD, Thomas, 45701 Herten (DE); LOBERT, Matthias, 45309 Essen (DE); KLOSTERMANN, Michael, 45141 Essen (DE); ECKHOFF, Michelle, 45357 Essen (DE)
(74) Vertreter: Evonik Patent Association

(57) **Zusammenfassung**

Verfahren zur Herstellung von SiOC-verknüpften, linearen Polydialkylsiloxan-Polyoxyalkylen-Blockcopolymeren mit sich wiederholenden (AB)-Einheiten umfassend die Umsetzung eines linearen, α,ω-(SiH)-funktionellen Polydialkylsiloxans (a) mit einem linearen α,ω-(OH)-funktionellen Polyoxyalkylen (b), unter Einsatz einer oder mehrerer Elementverbindungen der III. Haupt- und/oder 3. Nebengruppe als Katalysator (c), optional in Anwesenheit eines Lösungsmittels (d), wobei die beiden Reaktanden (a) und (b) bevorzugt in equimolaren Mengen und unter kontrollierter Wasserstoffentwicklung bis zum quantitativen SiH-Umsatz umgesetzt werden.

## Beschreibung

Die vorliegende Erfindung liegt auf den Gebieten der Silikon-Chemie sowie der Polyurethan-Chemie und betrifft ein Verfahren zur Herstellung von SiOC-verknüpften, linearen Polydialkylsiloxan-Polyoxyalkylen-Blockcopolymeren mit sich wiederholenden (AB)-Einheiten und deren Einsatz bei der Herstellung von Polyurethanen.

Das Verfahrensprinzip zur Herstellung von SiOC-verknüpften Polydialkylsiloxan-Polyoxyalkylen-Blockcopolymeren durch Umsetzung von SiH-funktionellen Polyorganosiloxanen mit Alkoholen bzw. OH-funktionellen Polyoxyalkylen-Polymeren unter Einsatz einer oder mehrerer Elementverbindungen der III. Haupt- und/oder 3. Nebengruppe als Katalysator ist prinzipiell aus EP 1460099 B1 bekannt. Dort wird eine bevorzugte Umsetzung von mindestens equimolaren bis zu 3-fachem Überschuß an Alkohol-Gruppen zu SiH-Gruppen beschrieben. Jenes Verfahren wurde genutzt, um lineare und/oder verzweigte Polyorganosiloxane mit Alkoholen und/oder OH-funktionellen Polyoxyalkylenen umzusetzen.

Des Weiteren ist auch ein Verfahren zur Herstellung von SiOC-verknüpften, linearen Polydimethylsiloxan-Polyether-Blockcopolymeren mit sich wiederholenden (AB)-Einheiten aus EP 1935922 B1 bekannt, wobei die so hergestellten Polydimethylsiloxan-Polyoxyalkylen-Blockcopolymere als grenzflächenaktive Additive zur Herstellung von Polyurethanschäumen, insbesondere zur Herstellung von mechanisch aufgeschäumten Polyurethanschaumstoffen, eingesetzt werden. In EP 1935922 B1 wird die Umsetzung von linearen α,ω-(SiH)-funktionellen Polydimethylsiloxanen mit linearen, α,ω-(OH)-funktionellen Polyetherdiolen unter Einsatz einer oder mehrerer Elementverbindungen der III. Haupt- und/oder 3. Nebengruppe als Katalysator beschrieben. Jenes Verfahren, das pur oder in Anwesenheit von Lösungsmittel durchgeführt werden kann, zeichnet sich im Wesentlichen dadurch aus, dass die (SiH)-Funktionen des Polydimethylsiloxans im Verhältnis zu den (OH)-Funktionen des Polyoxyalkylens im molaren Überschuß von bevorzugt 1,1 bis 2,0 eingesetzt werden und die Reaktion solange fortgesetzt wird, bis keine (SiH)-Gruppen mehr gasvolumetrisch nachgewiesen werden können.

Der überschüssige Einsatz des gegenüber der Polyetherdiolkomponente deutlich teureren Polysiloxans und der anschließenden langen Nachreaktion zur quantitativen Umsetzung der überschüssigen (SiH)-Gruppen ist unter ökonomischen Gesichtspunkten allerdings nachteilig.

Daher war es die Aufgabe der vorliegenden Erfindung ein einfaches, ökonomisch sinnvolles und stabiles Verfahren bereit zu stellen, mit dem die Herstellung von SiOC-verknüpften, linearen Polydialkylsiloxan-Polyoxyalkylen-Blockcopolymeren mit sich wiederholenden (AB)-Einheiten reproduzierbar und mit verbessertem Eigenschaftsprofil ermöglicht wird.

Überraschenderweise wurde nun gefunden, dass der Einsatz von vorzugsweise equimolaren Mengen von (SiH)-Funktionen eines linearen, α,ω-(SiH)-funktionellen Polydialkylsiloxans im Verhältnis zu den (OH)-Funktionen eines linearen α,ω-(OH)-funktionellen Polyoxyalkylens in Verbindung mit einer kontrollierten Wasserstoffentwicklung die Bereitstellung besonders hochmolekularer Produkte ermöglicht, die qualitativ hochwertigere Produkte darstellen als diejenigen, die nach dem in EP 1935922 B1 publizierten Verfahren erhalten werden können. Die kontrollierte Wasserstoffentwicklung kann durch eine kontrollierte Dosage bewirkt werden. Des Weiteren erweist sich das erfindungsgemäße Verfahren als deutlich stabiler und weniger fehleranfällig.

Gegenstand der Erfindung ist ein Verfahren zur Herstellung von SiOC-verknüpften, linearen Polydialkylsiloxan-Polyoxyalkylen-Blockcopolymeren mit sich wiederholenden (AB)-Einheiten umfassend die Umsetzung eines linearen, α,ω-(SiH)-funktionellen Polydialkylsiloxans (a) mit einem linearen α,ω-(OH)-funktionellen Polyoxyalkylen (b), unter Einsatz einer oder mehrerer Elementverbindungen der III. Haupt- und/oder 3. Nebengruppe als Katalysator (c), optional in Anwesenheit eines Lösungsmittels (d), wobei die beiden Reaktanden (a) und (b) bevorzugt in equimolaren Mengen und unter kontrollierter Wasserstoffentwicklung bis zum quantitativen SiH-Umsatz umgesetzt werden.

Reaktand (a) ist im Sinne dieser Erfindung : lineares α,ω-(SiH)-funktionelles Polydialkylsiloxan.

Reaktand (b) ist im Sinne dieser Erfindung : lineares α,ω-(OH)-funktionelles Polyoxyalkylen.

Ein weiterer Gegenstand der Erfindung sind die SiOC-verknüpften, linearen Polydialkylsiloxan-Polyether-Blockcopolymere mit sich wiederholenden (AB)-Einheiten, hergestellt gemäss dem erfindungsgemäßen Verfahren.

Ein weiterer Gegenstand der Erfindung ist die Verwendung der gemäss dem erfindungsgemässen Verfahren hergestellten SiOC-verknüpften, linearen Polydialkylsiloxan-Polyether-Blockcopolymere mit sich wiederholenden (AB)-Einheiten als grenzflächenaktive Additive zur Herstellung von Polyurethanschäumen, insbesondere zur Herstellung von Polyurethanschlagschäumen.

### Kurze Beschreibung der Abbildungen FIG 1 bis FIG 4

FIG 1 zeigt den Verlauf des Gasvolumens, freigesetzt durch den Reaktionsfortschritt in Abhängigkeit der zudosierten Siloxanmasse für Beispiel 6 aus dem experimentellen Teil, jeweils als Soll- und Ist-Umsatz.
FIG 2 zeigt den Verlauf des Gasvolumens, freigesetzt durch den Reaktionsfortschritt in Abhängigkeit der zudosierten Siloxanmasse für Beispiel 7 aus dem experimentellen Teil, jeweils als Soll- und Ist-Umsatz.
FIG 3 zeigt den Verlauf des Gasvolumens, freigesetzt durch den Reaktionsfortschritt in Abhängigkeit der zudosierten Siloxanmasse für Beispiel 8 aus dem experimentellen Teil, jeweils als Soll- und Ist-Umsatz.
FIG 4 zeigt die Abweichung des Soll- vom Ist-Umsatz in % in Abhängigkeit der dosierten Siloxanmasse für die Beispiele 6 bis 8 aus dem experimentellen Teil.

Die im erfindungsgemäßen Verfahren eingesetzten linearen α,ω-(SiH)-funktionellen Polydialkylsiloxane sind an sich bekannt. Sie können auf bekannte Weise nach beliebigen Verfahren des Stands der Technik (bevorzugt sauer) equilibriert werden.

Sie weisen vorzugsweise gewichtsmittlere Molekulargewichte zwischen ca. 650 und 6500 g/mol, bevorzugt zwischen 800 und 1500 g/mol, insbesondere zwischen ca. 1000 bis 1200 g/mol auf. Dies entspricht einer bevorzugten Ausführungsform der Erfindung. Die Ermittlung der mittleren Molekulargewichte basiert dabei auf den bekannten Methoden der GPC-Analytik.

Des Weiteren weisen Sie vorzugsweise SiH-Werte zwischen 0,3 und 3,0 mol/kg, bevorzugt zwischen 1,3 und 2,6 mol/kg, insbesondere zwischen 1,6 und 2,1 mol/kg auf. Die Ermittlung der Stoffmenge der SiH-Einheiten der linearen α,ω-(SiH)-funktionellen Polydialkylsiloxane basiert dabei auf der bekannten Methode der alkalisch-katalysierten SiH-Wert-Bestimmung.

Bevorzugt werden lineare α,ω-(SiH)-funktionellen Polydialkylsiloxane der allgmeinen Formel (I) eingesetzt:

M' - Da - M' Formel (I)

wobei
- M': = [HR¹₂SiO_{1/2}]
- D: = [R¹₂SiO_{2/2}]
- a =: 8 - 100, bevorzugt 10 - 60, insbesondere bevorzugt 12-40,
- R¹ =: unabhängig voneinander gleiche oder verschiedene Kohlenwasserstoffreste mit 1 - 20 Kohlenstoffatomen, bevorzugt Methyl, Ethyl, Propyl oder Butyl, insbesondere bevorzugt Methyl.

Die im erfindungsgemäßen Verfahren eingesetzten linearen α,ω-(OH)-funktionellen Polyoxyalkylene (im folgenden für die Zwecke dieser Erfindung auch vereinfacht "Polyetherdiole" genannt) sind ebenfalls an sich bekannt. Sie können nach beliebigen Verfahren des Stands der Technik hergestellt werden. Bevorzugt entsprechen sie der allgemeinen Formel (II):

HO-(CₙH(₂ₙ₋ₘ)R²ₘO-)_{b}-H Formel (II)

- b =: 1 - 200, bevorzugt 10-100, insbesondere bevorzugt 25-60,
- n =: 2-4,
- m =: 0 oder 1,
- R² =: unabhängig voneinander gleiche oder verschiedene Kohlenwasserstoffreste mit 1 - 12 Kohlenstoffatomen, bevorzugt Methyl, Ethyl, Propyl oder Butyl, insbesondere bevorzugt Methyl oder Ethyl.

Bevorzugt handelt es sich bei den Polyetherdiolen um Additionsprodukte von mindestens einem Alkylenoxid, ausgesucht aus der Gruppe Ethylenoxid, Propylenoxid, Butylenoxid, Dodecenoxid und/oder Tetrahydrofuran an difunktionelle Starter wie beispielsweise Wasser, Ethylen- oder Propylenglykol.

Vorzugsweise sind die Polyetherdiole aufgebaut aus mindestens zwei Monomereinheiten, insbesondere bevorzugt aus Ethylenoxid und Propylenoxid.

Die Polyetherdiole bestehen vorzugsweise im Wesentlichen aus Oxyethyleneinheiten oder Oxypropyleneinheiten, bevorzugt sind gemischte Oxyethylen- und Oxypropyleneinheiten mit einem Oxyethylenanteil von etwa 25 bis 70 Gew.-% und 70 bis 25 Gew.-% Oxypropylenanteil bezogen auf den Gesamtgehalt an Oxyalkyleneinheiten.

Die Oxyethyleneinheiten oder Oxypropyleneinheiten können sowohl statistisch als auch blockartig aufgebaut sein, bevorzugt sind diese blockartig aufgebaut.

Das gewichtsmittlere Molekulargewicht M_{w} jedes Polyetherdiols liegt vorzugsweise zwischen etwa 600 und 10.000 g/mol, bevorzugt 1.000 bis 5.000 g/mol, insbesondere bevorzugt 1.500 bis 3.500 g/mol. Die Ermittlung der mittleren Molekulargewichte basiert dabei auf den bekannten Methoden der OH-Zahl-Bestimmung.

Das im erfindungsgemäßen Verfahren bevorzugt eingesetzte molare Verhältnis von linearem α,ω-(SiH)-funktionellen Polydialkylsiloxan zu linearem α,ω-(OH)-funktionellem Polyoxyalkylen ist im equimolaren Bereich. Damit ist der Einsatz von vorzugsweise equimolaren Mengen von (SiH)-Funktionen des linearen, α,ω-(SiH)-funktionellen Polydialkylsiloxans im Verhältnis zu den (OH)-Funktionen des linearen α,ω-(OH)-funktionellen Polyoxyalkylens gemeint.

Wenn im Rahmen dieser Erfindung von equimolaren Verhältnissen bzw. equimolaren Mengen der beiden Reaktanden (a) und (b) gesprochen wird, dann umfasst das im Sinne dieser Erfindung ganz konkret den Bereich von 0,9 bis 1,10, bevorzugt 0,98 bis 1,02 von linearem α,ω-(SiH)-funktionellen Polydialkylsiloxan zu linearem α,ω-(OH)-funktionellen Polyoxyalkylen. Insbesondere ist dieses Verhältnis ganz genau equimolar, also 1 zu 1.

Der gesamte Siloxanblockanteil (A) beträgt im SiOC-verknüpften, linearen Polydialkylsiloxan-Polyoxyalkylen-Blockcopolymer mit sich wiederholenden (AB)-Einheiten vorzugsweise zwischen 20 und 50 Gew.-%, insbesondere 25 bis 30 Gew.-%, und der Anteil der Polyoxyalkylenblöcke (B) vorzugsweise zwischen 80 und 50 Gew.-%, bevorzugt 75 bis 70 Gew.-%. Es ist bevorzugt, wenn das Blockcopolymer ein mittleres gewichtsgemitteltes Molekulargewicht M_{w} von mindestens 10.000 g/mol bis ca. 250.000 g/mol, vorzugsweise 15.000 g/mol bis ca. 225.000 g/mol, insbesondere 20.000 g/mol bis ca. 200.000 g/mol aufweist. Die Ermittlung der mittleren Molmassen basiert dabei auf den bekannten Methoden der GPC-Analytik.

Je nach Anwendungsfall und angestrebten Produkteigenschaften kann das Verfahren wahlweise in Anwesenheit oder Abwesenheit von Lösungsmittel durchgeführt werden.

Sollen besonders hochmolekulare und damit einhergehend besonders hochviskose SiOC-verknüpfte Copolymere hergestellt werden, so ist der Einsatz eines Lösungsmittels besonders vorteilhaft.

Vorteilhaft einsetzbare Lösungsmittel sind z.B. Alkane, Isoalkane, Cycloalkane und/oder Alkylaromaten.

Vorteilhaft einsetzbare Alkane sind beispielsweise n-Hexan, n-Heptan, n-Octan, n-Nonan, n-Decan, n-Undecan und/oder n-Dodecan.

Vorteilhaft einsetzbare Cycloalkane sind beispielsweise Cyclohexan, Methylcyclohexan, Cycloheptan, Cyclooctan, Cyclononan, Cyclodecan, Cycloundecan, Cyclododecan und/oder Decalin.

Vorteilhaft einsetzbare Alkylaromaten sind Toluol, Xylol, Cumol, n-Propylbenzol, Ethylmethylbenzol, Trimethylbenzol, Solvent Naphtha und/oder jegliche großtechnisch verfügbare Alkylbenzole.

Bevorzugt eingesetzt werden hochsiedende Lösungsmittel mit Siedepunkten > 120°C, insbesondere bevorzugt hochsiedende Alkylbenzole.

Die Wahl der Art und Menge des optionalen Lösungsmittels richtet sich nach dem konkreten Anwendungsfall und ist in weiten Grenzen variierbar.

Im Sinne einer besonders guten Produktqualität und besonders guten Effizienz des Verfahrens werden im Rahmen einer bevorzugten Ausführungsform der Erfindung vorzugsweise zwischen 40 Gew.-% und 70 Gew.-% Lösungsmittel im Bezug auf die Summe der Mengen der Reaktanden (a), (b) und der Menge Lösungsmittel (c) eingesetzt, insbesondere bevorzugt zwischen 50 Gew.-% und 65 Gew.-%.

Die Reaktionstemperatur zur Herstellung der erfindungsgemässen Blockcopolymeren liegt im Rahmen einer bevorzugten Ausführungsform der Erfindung vorzugsweise bei 60°C bis 140°C, insbesonders bevorzugt bei 100°C bis 120°C.

Die im erfindungsgemäßen Verfahren im Rahmen einer bevorzugten Ausführungsform der Erfindung vorzugsweise einsetzbaren Katalysatoren sind lewissaure Elementverbindungen der III. Hauptgruppe, insbesondere borhaltige und/oder aluminiumhaltige Elementverbindung.

Von den lewissauren Elementverbindungen der 3. Nebengruppe sind insbesondere Scandiumhaltige, Yttrium-haltige, Lanthan-haltige und/oder Lanthanoid-haltige Lewissäuren bevorzugt. Erfindungsgemäß können die Elementverbindungen der III. Haupt- und/oder 3. Nebengruppe besonders bevorzugt als Halogenide, Alkylverbindungen, fluorhaltige, cycloaliphatische und/oder heterocyclische Verbindungen eingesetzt werden.

Eine bevorzugte Ausführungsform der Erfindung sieht vor, dass fluorierte und/oder nicht fluorierte Organoborverbindungen als Katalysatoren eingesetzt werden, insbesondere solche, die ausgewählt sind aus: (C₅F₄)(C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C₆H₅)(C₆F₅)₂; B(Ph)₂(C₆F₅); [C₆H₄(*ₘ*CF₃)]₃B; [C₆H₄(*p*OCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅); (C₆F₅)₂B(OC₂H₅); (C₆F₅)₂B-CH₂CH₂Si(CH₃)₃; 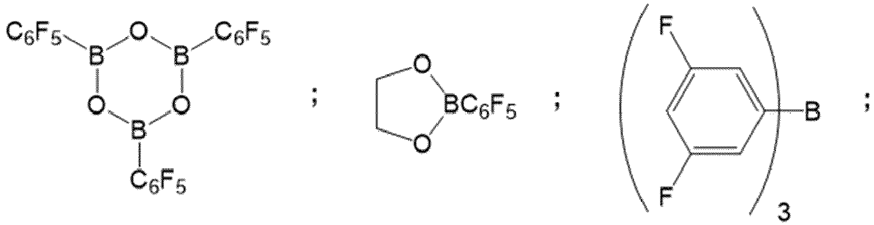 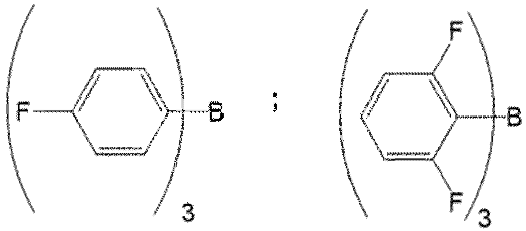 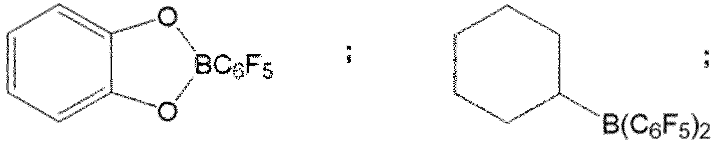 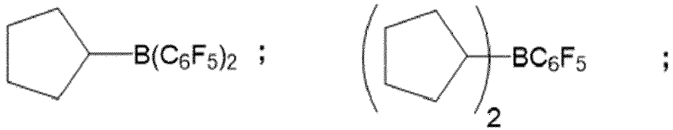 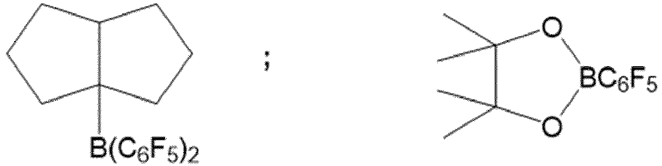 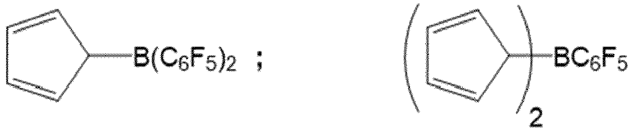 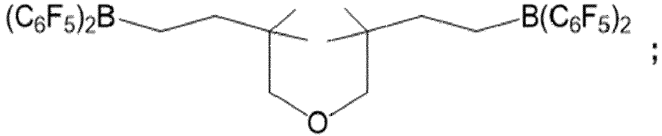 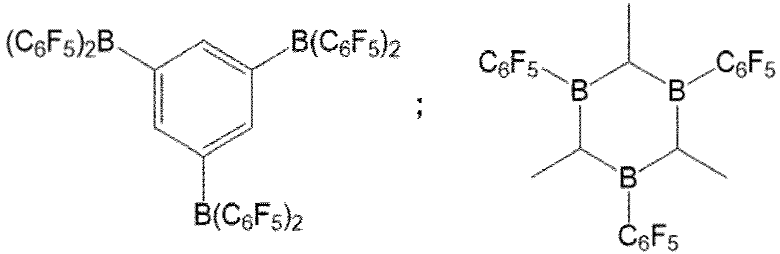 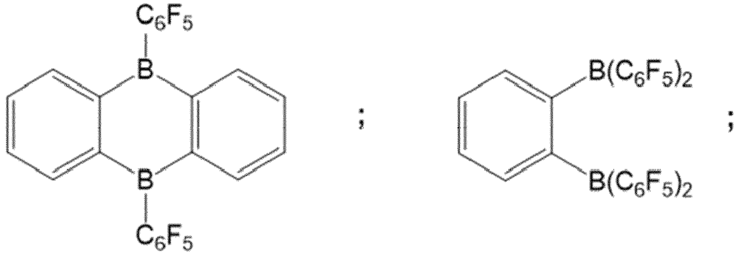 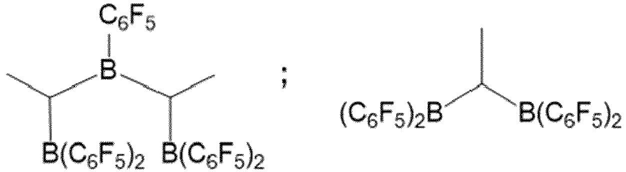 insbesondere Tris(Perfluortriphenylboran) [1109-15-5], Bortrifluorid-Etherat [109-63-7], Boran-Triphenylphosphinkomplex [2049-55-0], Triphenylboran [960-71-4], Triethylboran [97-94-9] und Bortrichlorid [10294-34-5], Tris(pentafluorophenyl)-Boroxin (9CI) [223440-98-0], 4,4,5,5,-Tetramethyl-2-(pentafluorophenyl)-1,3,2-Dioxaborolan (9Cl) [325142-81-2], 2-(Pentafluorophenyl)-1,3,2-Dioxaborolan (9Cl) [336880-93-4], Bis(pentafluorophenyl)cyclohexylboran [245043-30-5], Di-2,4-cyclopentadien-1-yl(pentafluorophenyl)-Boran (9Cl) [336881-03-9], (Hexahydro-3a(1H)-pentalenyl) bis(pentafluorophenyl) boran (9Cl) [336880-98-9], 1,3-[2-[Bis(pentafluorophenyl)boryl]ethyl]tetramethyldisiloxan [336880-99-0], 2,4,6-Tris(pentafluorophenyl)borazin (7Cl, 8Cl, 9Cl) [1110-39-0], 1,2-Dihydro-2-(pentafluorophenyl)-1,2-azaborin (9Cl) [336880-94-5], 2-(Pentafluorophenyl)-1,3,2-benzodioxaborol (9Cl) [336880-96-7], Tris(4-trifluoromethoxyphenyl)boran [336880-95-6], Tris(3-trifluoromethylphenyl)boran [24455-00-3], Tris(4-fluorophenyl)boran [47196-74-7], Tris(2,6-difluorophenyl)boran [146355-09-1], Tris(3,5-difluorophenyl)boran [154735-09-8], Methyliumtriphenyltetrakis(pentafluorophenyl)borat [136040-19-2] und/oder N,N-Dimethylaniliniumtetrakis(pentyfluorophenyl)borat sowie Gemische der vorstehenden Katalysatoren können bevorzugt eingesetzt werden.

Eine weitere bevorzugte Ausführungsform der Erfindung sieht vor, dass fluorierte und/oder nicht fluorierte Organoaluminiumverbindungen als Katalysatoren eingesetzt werden, insbesondere solche, die ausgewählt sind aus:
AlCl₃ [7446-70-0], Aluminiumacetylacetonat [13963-57-0], AlF₃ [7784-18-1], Aluminiumtrifluormethansulfonat [74974-61-1], Di-*iso*-Butylaluminiumchlorid [1779-25-5], Di-*iso-*Butylaluminiumhydrid [1191-15-7] und/oder Triethylaluminium [97-93-8] sowie deren Gemische.

Eine weitere bevorzugte Ausführungsform der Erfindung sieht vor, dass fluorierte und/oder nicht fluorierte Organoscandiumverbindungen als Katalysatoren eingesetzt werden, insbesondere solche, die ausgewählt sind aus:
Scandium(III)chlorid [10361-84-9], Scandium(III)fluorid [13709-47-2], Scandium(III)-hexafluoroacetylacetonat [18990-42-6], Scandium(III)trifluormethansulfonat [144026-79-9] und/oder Tris(cyclopentadienyl)scandium [1298-54-0] sowie deren Gemische.

Eine weitere bevorzugte Ausführungsform der Erfindung sieht vor, dass fluorierte und/oder nicht fluorierte Organoyttriumverbindungen als Katalysatoren eingesetzt werden, insbesondere solche, die ausgewählt sind aus:
Tris(cyclopentadienyl)yttrium [1294-07-1], Yttrium(III)chlorid [10361-92-9], Yttrium(III)fluorid [13709-49-4], Yttrium(III)-hexafluoroacetylacetonat [18911-76-7] und/oder Yttrium(III)naphthenat [61790-20-3] sowie deren Gemische.

Eine weitere bevorzugte Ausführungsform der Erfindung sieht vor, dass fluorierte und/oder nicht fluorierte Organolanthanverbindungen als Katalysatoren eingesetzt werden, insbesondere solche, die ausgewählt sind aus:
Lanthan(III)chlorid [10099-58-8], Lanthan(III)fluorid [13709-38-1], Lanthan(III)iodid [13813-22-4], Lanthan(III)trifluormethansulfonat [52093-26-2] und/oder, Tris(cyclopentadienyl)lanthan [1272-23-7] sowie deren Gemische.

Eine weitere bevorzugte Ausführungsform der Erfindung sieht vor, dass fluorierte und/oder nicht fluorierte Organolanthanoidverbindungen als Katalysatoren eingesetzt werden, insbesondere solche, die ausgewählt sind aus:
Cer(III)bromid [14457-87-5], Cer(III)chlorid [7790-86-5], Cer(III)fluorid [7758-88-5], Cer(IV)fluorid [60627-09-0], Cer(III)trifluoracetylacetonat [18078-37-0], Tris(cyclopentadienyl)cer [1298-53-9], Europium(III)fluorid [13765-25-8], Europium(II)chlorid [13769-20-5], Praesodym(III)hexafluoroacetylacetonat [47814-20-0], Praesodym(III)fluorid [13709-46-1], Praesodym(III)trifluoracetylacetonat [59991-56-9], Samarium(III)chlorid [10361-82-7], Samarium(III)fluorid [13765-24-7], Samarium(III)naphthenat [61790-20-3], Samarium(III)-trifluoracetylacetonat [23301-82-8], Ytterbium(III)fluorid [13760-80-8], Ytterbium(III)trifluormethansulfonat [54761-04-5] und/oder Tris(cyclopentadienyl)ytterbium [1295-20-1] sowie deren Gemische.

Die Katalysatoren werden vorzugsweise in Mengen von ca. 0,01 bis ca. 0,2 Gew.-%, insbesondere 0,03 bis 0,10 Gew.-%, bezogen auf die Summe der Menge der Reaktanden (a) und (b), eingesetzt.

Der oder die Katalysator(en) können homogen oder als heterogene(r) Katalysator(en) eingesetzt werden. Hierbei kann der oder die Katalysator(en) gelöst oder suspendiert zugegeben werden. Vorteilhafterweise kann der Katalysator in einem kleinen Teil des Lösungsmittels oder des Polyetherdiols suspendiert oder gelöst und zugesetzt werden, insbesonders bevorzugt kann er gelöst im Lösungsmittel zugesetzt werden.

In einer bevorzugten Ausführungsform des erfindungsgemäßen Verfahrens wird das Polyetherdiol vorgelegt und bei erhöhter Temperatur, optional in Anwesenheit des Lösungsmittels, im Vakuum getrocknet, um die potentielle Nebenreaktion von Si-H zu Si-OH in Anwesenheit von Wasser zu unterbinden. Dies kann beispielsweise durch Vakuumdestillation erfolgen. Die dehydrogenative Kupplung kann durch die Einstellung eines schwach sauren Mediums begünstigt werden. Um den umzusetzenden Alkohol schwach sauer einzustellen, kann man vor, während oder nach der Destillation beispielsweise Diammoniumphosphat (DAP; 100 bis 500 ppm) zusetzen.

In einer bevorzugten Ausführungsform des erfindungsgemäßen Verfahrens wird das bevorzugt getrocknete Polyetherdiol (Reaktand (b)) auf Reaktionstemperatur aufgeheizt und der Katalysator zugesetzt und durchmischt. Dann wird das lineare, α,ω-(SiH)-funktionelle Polydialkylsiloxan (Reaktand (a)) unter kontrollierter Wasserstoffentwicklung zudosiert.

In einer bevorzugten Ausführungsform des erfindungsgemäßen Verfahrens wird das bevorzugt getrocknete Polyetherdiol (Reaktand (b)) auf Reaktionstemperatur aufgeheizt und der Katalysator zugesetzt und durchmischt. Dann wird das Siloxan (Reaktand (a)), verdünnt mit einem Lösungsmittel, unter kontrollierter Wasserstoffentwicklung zudosiert.

In einer bevorzugten Ausführungsform des erfindungsgemäßen Verfahrens wird das bevorzugt getrocknete Polyetherdiol (Reaktand (b)) auf Reaktionstemperatur aufgeheizt, mit Lösungsmittel verdünnt und der Katalysator zugesetzt und durchmischt. Dann wird das Siloxan (Reaktand (a)) unter kontrollierter Wasserstoffentwicklung zudosiert.

In einer bevorzugten Ausführungsform des erfindungsgemäßen Verfahrens wird das bevorzugt getrocknete Polyetherdiol (Reaktand (b)) auf Reaktionstemperatur aufgeheizt, mit Lösungsmittel verdünnt und der Katalysator zugesetzt und durchmischt. Dann wird das Siloxan (Reaktand (a)), verdünnt mit einem Lösungsmittel, unter kontrollierter Wasserstoffentwicklung zudosiert.

Für diese vier vorgenannten bevorzugten Ausführungsformen gilt jeweils: Die Zudosierung erfolgt vorzugsweise kontinuierlich, so dass ein kontrollierter Reaktionsfortschritt ermöglicht wird, der sich durch eine damit korrespondierende kontinuierliche Gasfreisetzung bemerkbar macht. Nach beendeter Gasfreisetzung ist die Reaktion beendet, was auch durch Probennahme und externer SiH-Wert-Bestimmung belegt werden kann. In einer anderen bevorzugten Ausführungsform kann die Zugabe des puren oder mit Lösungsmittel verdünnten Siloxans (Reaktand (a)) in den zuvor genannten vier Ausführungsformen statt kontinuierlich auch jeweils Intervall-artig durchgeführt werden.

Hierbei wird das Siloxan (Reaktand (a)) dann also in Intervallen zudosiert. Das bedeutet, nach jedem Dosier-Intervall erfolgt eine Dosierpause, die vorteilhaft so lange währt, bis durch ausbleibende Wasserstoffentwicklung ein quantitativer SiH-Umsatz der zuvor dosierten Portion angezeigt wird. Dann erfolgt die Zugabe des nächsten Intervalls. Vorzugsweise werden die Dosagemengen und Zeiten je Intervall konstant gehalten, aber dem Fachmann sind im konkreten Anwendungsfall Anpassungen möglich. So können zu Begin der Synthese zunächst größere Mengen Siloxan je Intervall dosiert werden und gegen Ende kleinere oder umgekehrt.

Während der Dosage ist es stets überaus vorteilhaft, für eine effiziente Durchmischung zu sorgen.

Erfindungsgemäß erfolgt die Umsetzung der Reaktanden (a) und (b) unter kontrollierter Wasserstoffentwicklung bis zum quantitativen SiH-Umsatz. Darunter wird im Rahmen dieser Erfindung verstanden, dass die Abweichung des Ist-Umsatzes vom Soll-Umsatz möglichst gering ist, bevorzugt im Bereich von 0 bis 10%, bevorzugt von 0 bis 7,5% und besonders bezorzugt von 0 bis 5% liegt. Unter dem Begriff Soll-Umsatz wird die Menge Wasserstoff verstanden, die bei quantitativem SiH-Umsatz der zum jeweiligen Zeitpunkt im Reaktionssystem befindlichen Menge Wasserstoffsiloxan freigesetzt werden kann. Unter dem Begriff Ist-Umsatz wird die zum jeweiligen Zeitpunkt wirklich freigesetzte Menge Wasserstoff verstanden. Diese kontrollierte Wasserstoffentwicklung kann durch eine kontrollierte Dosage von Komponente (a) zu Komponente (b) verwirklicht werden. Ist die Abweichung zwischen Soll- und Ist-Umsatz beispielsweise zu hoch, so kann die Zugabegeschindigkeit von Komponente (a) gedrosselt werden. Die Methode zur Kontrolle der Wasserstoffentwicklung ist im Beispielteil genau beschrieben.

Die SiOC-verknüpften, linearen Polydialkylsiloxan-Polyoxyalkylen-Blockcopolymere mit sich wiederholenden (AB)-Einheiten, hergestellt nach dem erfindungsgemäßen Verfahren, können besonders vorteilhaft als grenzflächenaktive Additive zur Herstellung von Polyurethanschäumen, insbesondere zur Herstellung von mechanisch aufgeschäumten Polyurethanschaumstoffen verwendet werden. Diese Verwendung ist daher ebenfalls Gegenstand der vorliegenden Erfindung.

Mechanisch aufgeschäumte Polyurethanschäume sind in diesem Zusammenhang Schäume, die ohne die Verwendung eines physikalischen oder chemischen Treibmittels hergestellt werden. Ihre Herstellung erfolgt typischer Weise durch mechanisches Aufschäumen eines Polyol-Isocyanat-Gemisches, wobei Luft oder Stickstoff unter hohem Schereintrag in die Reaktionsmischung eingeschlagen werden. Die so hergestellte Schaummasse kann anschließend auf ein beliebiges Substrat, z.B. eine Teppichrückseite oder ein Trennpapier, gestrichen und bei erhöhten Temperaturen ausgehärtet werden. Bedingt durch ihre Herstellung werden mechanisch aufgeschäumte Polyurethanschäume in Fachkreisen auch als Schlagschäume bezeichnet. Der Begriff des Schlagschaums wird in eben dieser Weise auch für die vorliegende Erfindung gebraucht.

Ein weiterer Gegenstand dieser Erfindung ist zudem ein Polyurethanschaum, vorzugsweise Polyurethan-Schlagschaum, hergestellt unter Einsatz von SiOC-verknüpften, linearen Polydialkylsiloxan-Polyoxyalkylen-Blockcopolymeren mit sich wiederholenden (AB)-Einheiten, welche nach dem erfindungsgemäßen Verfahren zugänglich sind.

Der Begriff Polyurethanschaum bezeichnet im Rahmen dieser Erfindung Schaumstoffe, welche durch Umsetzung von Polyisocyanaten mit ihnen gegenüber reaktiven Verbindungen, bevorzugt mit OH-Gruppen ("Polyole") und/oder NH-Gruppen, gebildet werden (Adam et al., "Polyurethanes", Ullmann's Encyclopedia of Industrial Chemistry", 2012, Wiley VCH-Verlag, Weinheim). Polyole zur Herstellung entsprechender Schäume sind an sich bekannt. Besonders geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Polyurethan-Schäumen üblicherweise verwendeten Polyetherpolyole und Polyesterpolyole. Polyetherpolyole können durch Umsetzung von mehrwertigen Alkoholen oder Aminen mit Alkylenoxiden gewonnen werden. Polyesterpolyole basieren auf Estern mehrwertiger Carbonsäuren (meist Phthalsäure, Adipinsäure oder Terephthalsäure) mit mehrwertigen Alkoholen (meist Glycolen). Weiterhin bevorzugte Polyole sind kurzkettige Diole, wie z.B. Ethylenglycol, Propylenglycol, Diethylenglycol oder Diproyplenglycol die Beispielsweise als Kettenverlängerer eingesetzt werden können.

Isocyanate zur Herstellung von Polyurethan-Schäumen sind an sich ebenfalls bekannt. Vorzugsweise weist die Isocyanat-Komponente ein oder mehrere organische Isocyanate mit zwei oder mehr Isocyanat-Funktionen auf. Geeignete Isocyanate im Sinne dieser Erfindung sind z. B. alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet sind weiterhin Isocyanat-basierte Prepolymere, insbesondere MDI-basierte Prepolymere.

Das Verhältnis von Isocyanat zu Polyol, ausgedrückt als NCO-Index, liegt im Rahmen der vorliegenden Erfindung vorzugsweise im Bereich von 40 bis 500, bevorzugt 60 bis 350, besonders bevorzugt 80 - 120. Der NCO-Index beschreibt dabei das Verhältnis von tatsächlich eingesetztem Isocyanat zu berechnetem Isocyanat (für eine stöchiometrische Umsetzung mit Polyol). Ein NCO-Index von 100 steht für ein molares Verhältnis der reaktiven Gruppen von 1 zu 1.

Im Rahmen dieser Erfindung wird für die erfindungsgemäßen SiOC-verknüpften, linearen Polydialkylsiloxan-Polyoxyalkylen-Blockcopolymere mit sich wiederholenden (AB)-Einheiten vereinfacht auch der Begriff "Polydimethylsiloxan-Polyether-Blockcopolymere" oder vereinfacht der Begriff "Polydimethylsiloxan-Polyoxyalkylen-Blockcopolymere"verwendet.

Neben den erfindungsgemäßen Polydimethylsiloxan-Polyoxyalkylen-Blockcopolymeren können die Polyurethane noch weitere Additive und Zusatzstoffe, wie z.B. Füllstoffe, Treibmittel, Katalysatoren, organische und anorganische Pigmente, Stabilisatoren, wie z.B. Hydrolyse- oder UV-Stabilisatoren, Antioxidantien, Absorber, Vernetzer, Farbstoffe, Emulgatoren oder Dispergieradditive, Verlaufshilfsmittel oder Verdicker / Rheologie-Additive enthalten.

Als Katalysatoren zur Herstellung von Polyurethan-Schäumen, insbesondere von Polyurethan-Schlagschäumen im Sinne der vorliegenden Erfindung sind Gel-Katalysatoren, die die Polyurethanreaktion zwischen Isocyanat und Polyol katalysieren, besonders geeignet. Diese können ausgewählt sein aus der Klasse der Amin-Katalysatoren, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol, Tetramethylguanidin, und 1,8-Diazabicyclo[5.4.0]undec-7-en. Weiterhin können Aminkatalysatoren ausgewählt sein aus der Klasse der sogenannten emissionsfreien Aminkatalysatoren, welche dadurch gekennzeichnet sind, dass sie ein katalytisch aktives Stickstoffatom und eine gegenüber NCO-Gruppen reaktive Gruppe, wie z.B. eine OH-Gruppe aufweisen. Entsprechende emissionsfreie Aminkatalysatoren werden Beispielsweise unter der Produktreihe Dabco^{®} NE von der Firma Evonik vertrieben. Weiterhin können die Katalysatoren ausgewählt sein aus der Klasse der Metall-Katalysatoren, wie z.B. Zinn, Zink, Bismuth, Eisen, Kupfer, Nickel, oder Zirkonium-basierte Katalysatoren. Metallkatalysatoren können hierbei in Form von Salzen oder als organische Derivate vorliegen. Die oben genannten Katalysatoren können sowohl pur als auch als Katalysatormischungen verwendet werden. Im Fall von Polyurethan-Schlagschäumen, sind thermolatente Katalysatoren, sprich Katalysatoren, die ihre Wirksamkeit erst ab einer bestimmten Aktivierungstemperatur entfalten und so ein verzögertes Aushärten der Schäume ermöglichen, besonders geeinigt.

Weiterhin kann es bevorzugt sein, wenn bei der Herstellung von Polyurethanschäumen, inbesondere Polyurethanschlagschäumen, neben den erfindungsgemäßen Polydimethylsiloxan-Polyoxyalkylen-Blockcopolymeren als zusätzliche Komponente noch mindestens ein seitenständiger Stabilisator verwendet wird. Seitenständige Stabilisatoren sind hierbei ebenfalls Polyethersiloxane, die jedoch eine Silikonkette aufweisen, welche seitenständige und ggf. endständige Polyetherketten trägt. Die Polyetherketten können hierbei sowohl über eine Silizium-Kohlenstoff-Verknüpfung (Si-C) oder eine Silizium-Sauerstoff-Kohlenstoff-Verknüpfung (Si-O-C) an die Silikonkette gebunden sein, wobei Silizium-Kohlenstoff-Verknüpfungen besonders bevorzugt sind. Insbesondere sind hierbei solche seitenständige Si-C-basierten Polyethersiloxane bevorzugt, welche der allgemeinen Formel (III) entsprechen, 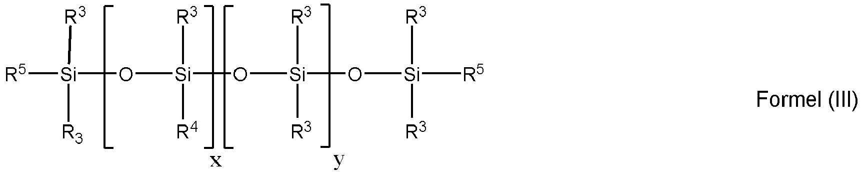 wobei
x = 0 bis 50, bevorzugt 1 bis 25, besonders bevorzugt 2 bis 15
y = 0 bis 250, bevorzugt 5 bis 150, besonders bevorzugt 5 bis 100
und wobei die Reste R³ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und wobei die Reste R⁴ unabhängig voneinander gleiche oder verschiedene OH-funktionelle oder terminierte, bevorzugt Methyl- oder Acetyl-terminierte Polyoxyalkylenreste, vorzugsweise Polyoxyethylenpolyoxypropylenreste sind, und wobei die Reste R⁵ entweder R³ oder R⁴ entsprechen.

Im Rahmen der vorliegenden Erfindung handelt es sich bei den Polyurethanschäumen bevorzugt um Polyurethan-Schlagschäume, welche durch mechanisches Aufschlagen der Polyol-Isocyanat-Mischung hergestellt werden. Bevorzugt enthalten solche Schlagschäume weniger als 2 Gew.-%, besonders bevorzugt weniger als 1 Gew.-%, insbesondere bevorzugt weniger als 0,5 Gew.-%, ganz besonders bevorzugt weniger als 0,1 Gew.-% eines chemischen oder physikalischen Treibmittels. Ganz besonders bevorzugt enthalten die Polyurethanschäume gar kein physikalisches oder chemisches Treibmittel.

Wie bereits beschrieben ist die Verwendung der erfindungsgemäßen Polydimethylsiloxan-Polyoxyalkylen-Blockcopolymeren zur Herstellung von Polyurethan-Schlagschäumen ein besonders bevorzugter Gegenstand der vorliegenden Erfindung. Bevorzugt lassen sich solche Polyurethan-Schlagschäume durch ein Verfahren herstellen umfassend die Schritte
a) Bereitstellen einer Polyol-Komponente, einer Isocyanat-Komponente, mindestens eines erfindungsgemäßen Polydimethylsiloxan-Polyoxyalkylen-Blockcopolymers sowie ggf. weiterer Additive
b) Vermischung aller Komponenten zur einer homogenen Mischung
c) mechanisches Aufschäumen der Mischung unter Einbringen eines Gases, wie z.B. Luft oder Stickstoff, zu einem (vorzugsweise homogenen, feinzelligen) Schaum
d) Aufbringen der aufgeschäumten Reaktionsmischung auf ein Substrat
e) Aushärten der aufgeschäumten Reaktionsmischung.

Es wird klargestellt, dass die Verfahrensschritte dieses Verfahrens wie oben dargestellt keiner festen zeitlichen Abfolge unterworfen sind. So können beispielsweise Verfahrensschritt b) und c) zeitgleich stattfinden, sprich einzelne Komponenten werden erst während des Aufschäumvorgangs zur Reaktionsmischung gegeben und mit dieser vermischt. Auch können einzelne Additive, wie z.B. der Katalysator, erst nach dem Verfahrensschritt c) zur mechanisch aufgeschäumten Reaktionsmischung gegeben werden.

Es entspricht einer bevorzugten Ausführungsform der vorliegenden Erfindung, wenn im Verfahrensschritt c) die Reaktionsmischung aus Polyol, Isocyanat und ggf. weiteren Additiven durch das Aufbringen hoher Scherkräfte aufgeschäumt wird. Das Aufschäumen kann hierbei unter Zuhilfenahme von dem Fachmann geläufigen Scheraggregaten wie z.B. Dispermaten, Dissolvern, Hansa-Mixern oder Oakes-Mixern erfolgen.

Weiterhin ist es bevorzugt, wenn die mechanisch aufgeschäumte Reaktionsmischung nach dem Verfahrensschritt c) eine Dichte im Bereich von 50 - 1000 g/L, bevorzug im Bereich von 75 - 600 g/L, besonders bevorzugt im Bereich von 100 - 450 g/L aufweist.

Im Verfahrensschritt d) kann die Reaktionsmischung auf nahezu jedes beliebige Substrat aufgebracht werden, wie z.B. auf Teppichrückseiten, die Rückseite von Kunstrasen, Klebebeschichtungen, textile Träger, Trenn-Papiere oder Trennfolien sowie auf Metalle, entweder zum permanenten Verbleib auf dem Metall oder zur späteren Entnahme der ausgehärteten Reaktionsmischung.

Es ist weiterhin bevorzugt, wenn im Verfahrensschritt e) die aufgeschäumte Reaktionsmischung bei erhöhter Temperaturen ausgehärtet wird. Erfindungsgemäß bevorzugt sind hierbei Aushärtetemperaturen von min. 50 °C, bevorzugt von 60 °C, mehr bevorzugt von mindestens 70 °C.

Die Verwendung eines erfindungsgemäßen Polyurethanschaums, vorzugsweise PU-Schlagschaums, wie zuvor beschrieben, zur Herstellung von Bodenbelägen wie Teppichen, Trittschalldämmungen oder Kunstrasen, sowie zur Herstellung von Textilbeschichtungen oder von Dichtungsmaterialien, Gap fillern, Shock-Pads oder Compression-Pads ist ein weiterer Gegenstand der Erfindung.

### Experimenteller Teil:

### Messmethoden:

Zur Bestimmung von Parametern oder Messwerten werden im Rahmen der vorliegenden Erfindung vorzugsweise die nachfolgend beschriebenen Methoden verwendet. Insbesondere wurden diese Methoden in den Beispielen des vorliegenden Schutzrechts verwendet.

Die Bestimmung des SiH-Umsatzes der dehydrogenativen Kupplung erfolgt durch Butylatkatalysierte Freisetzung des in der Probe enthaltenen Rest-(SiH) als elementarem Wasserstoff und dessen quantitativer Bestimmung.

Gewichtsmittlere und zahlenmittlere Molekulargewichte werden im Rahmen dieser Erfindung für die hergestellten SiOC-verknüpften, linearen Polydialkylsiloxan-Polyoxyalkylen-Blockcopolymeren kalibriert gegen einen Polystyrolstandard durch Gelpermeationschromatographie (GPC) bestimmt. In den folgenden Beispielen wird der Polydispersitätsindex (PDI) als weiterer charakteristischer Parameter zur Beschreibung der Molekulargewichtsverteilung angegeben. Die GPC wurde durchgeführt auf einem PSS SECurity 1260 (Agilent 1260) ausgestattet mit einem RI-Detektor und einer SDV 1000/10000 Å Säulenkombination bestehend aus einer 0,8 cm x 5 cm Vorsäule und zwei 0,8 cm x 30 cm Hauptsäulen bei einer Temperatur von 30°C und einer Fließrate von 1 mL/min (mobile Phase: THF). Die Probenkonzentration betrug 10 g/L und das Injektionsvolumen 20 µL.

Die nasschemische Analytik wurde in Anlehnung an internationale Standardmethoden durchgeführt: lodzahl (IZ; DGF C-V 11 a (53); Säurezahl (SZ; DGF C-V 2); OH-Zahl (ASTM D 4274 C).

### Beschreibung der Methode zur Kontrolle der Wasserstoffentwicklung

Das erfindungsgemäße Verfahren zeichnet sich dadurch aus, dass die beiden Reaktanden (a) und (b) bevorzugt in equimolaren Mengen und unter kontrollierter Wasserstoffentwicklung bis zum quantitativen SiH-Umsatz umgesetzt werden, wobei insbesondere Reaktand (b) vorgelegt und Reaktand (a) zudosiert wird. Der Begriff der "kontrollierten Wasserstoffentwicklung" sieht dabei insbesondere vor, dass die Geschwindigkeit der Zugabe der Komponente (a) zu (b) so erfolgt, dass die Abweichung des Ist-Umsatzes vom Soll-Umsatz bevorzugt im Bereich von 0 bis 10%, bevorzugt von 0 bis 7,5% und besonders bevorzugt von 0 bis 5% liegt.

Die Methode zur Kontrolle der Wasserstoffentwicklung ist wie folgt:
Die Reaktion wird in einem 1000-ml-Planschliff-Vierhalskolben, ausgerüstet mit Edelstahl Sigma-Rührer^{®}, Innenthermometer und einem Rückflusskühler mit Gasableitungsschlauch durchgeführt. Als Heizmedium dient ein Standard Heizpilz, welcher mit einer PID Fuzzy Logic geregelt wird, um die SollTemperatur einzustellen. Das zu dosierende Siloxan (= Komponente (a)) wird über ein Vorratsgefäß, welches auf einer tarierten Waage steht, mittels Peristaltikpumpe angesaugt und in den Planschliffkolben überführt.

Der Gasableitungsschlauch des Planschliffkolbens führt über ein Übergangsstück mit Olive in einen gasdicht verschlossenen 4 Liter 2-Halskolben, welcher totvolumenfrei mit abgekochtem, gasfreiem Wasser gefüllt ist. Der 2-Halskolben ist weiterhin ausgestattet mit einem Gaseinleitungsrohr mit Olive, welches bis kurz oberhalb des Kolbenbodens reicht. Der 2-Halskolben steht auf einer tarierten Waage.

Bei Start der Siloxan-Dosierung setzt direkt die Reaktion ein und das entstehende Gas, welches eine Volumenausdehnung im gesamten System erzeugt, wird in den Zweihalskolben überführt. Dieses wiederum führt dazu, dass der Wasserinhalt über das Einleitungsrohr aus dem Kolben gedrückt wird und in einem weiteren Auffangbehälter gesammelt wird.

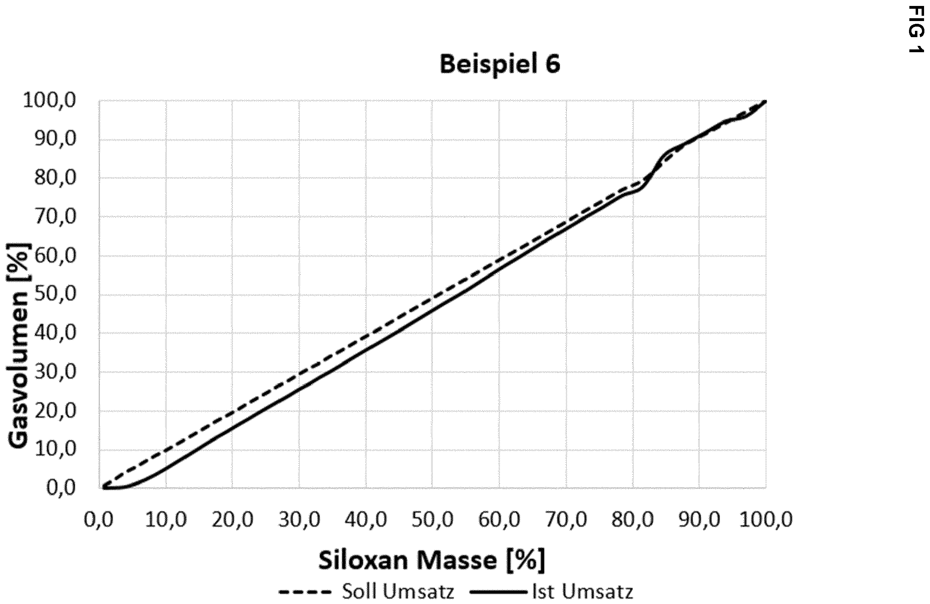

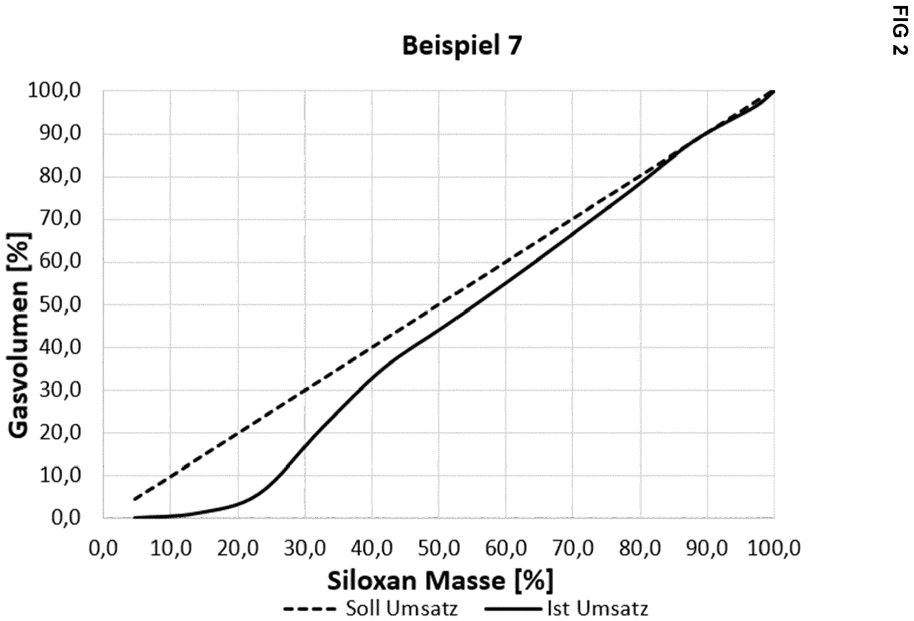

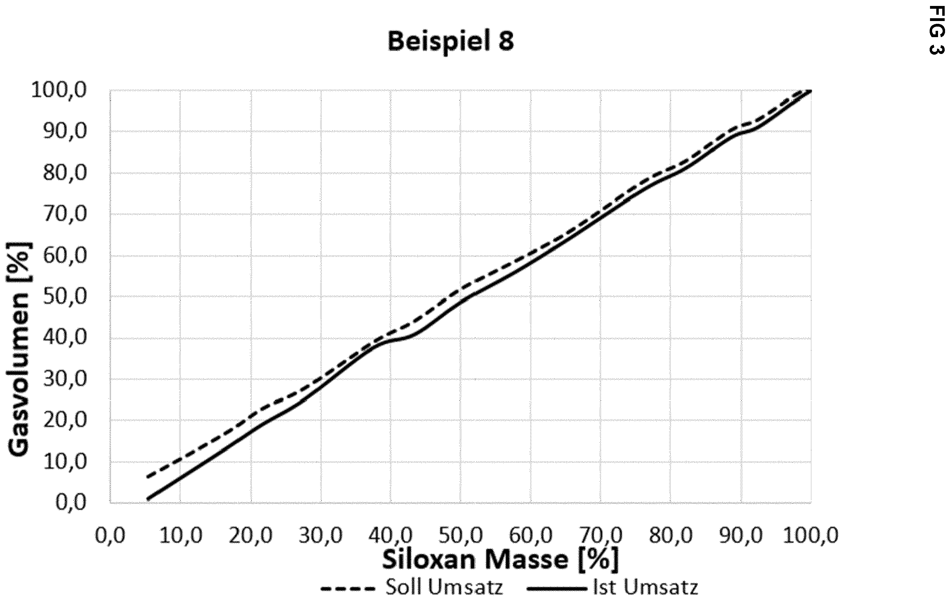

Bei einem kontinuierlichem Datenabgriff der einzelnen Massen über die Differenzwägung des Siloxans und des 2-Halskolbens ist darstellbar, mit welcher Geschwindigkeit die Reaktion der beiden Reaktanden (a) und (b) zum Produkt stattfindet. Hierzu zeichnet man Datenpaare der Massen des Siloxanvorlagekolbens und des 2-Halskolbens auf. Über die Masse des dosierten Siloxans kann errechnet werden, welches theoretische Gasvolumen der freigesetzte Wasserstoff (Nebenprodukt) der Kondensationsreaktion zu diesem Zeitpunkt einnehmen würde. So kann der Soll-Umsatz des jeweiligen Reaktionssystems über den gesamten Reaktionsverlauf berechnet werden. In den Abbildungen FIG 1 bis 3 als gestrichelte Linie dargestellt.

Über die Masse des verdrängten Wassers und unter Zuhilfenahme der Dichte des Wassers bei gegebener Temperatur ist das real entwickelte Gasvolumen bestimmbar. Das Gasvolumen wird unter Zuhilfenahme der Gasgesetze für ideale Gase auf Normalbedingungen umgerechnet. So kann der Ist-Umsatz des jeweiligen Reaktionssystems über den gesamten Reaktionsverlauf ermittelt werden. In den Abbildungen FIG 1 bis 3 als durchgezogene Linie dargestellt.

Der Quotient aus real entwickeltem Gasvolumen und theoretischem Gasvolumen beschreibt den zu diesem Zeitpunkt herrschenden Umsatzgrad der Reaktion.

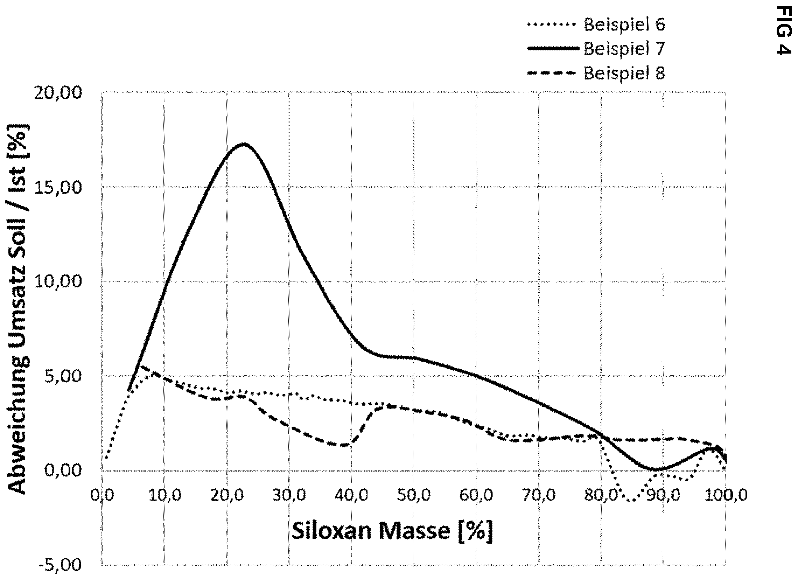

Wie den folgenden erfindungsgemäßen Beispielen und Abbildung FIG 4 zu entnehmen ist, ist es erfindungsgemäß ganz besonders bevorzugt, dass die Geschwindigkeit der Siloxan-Dosierung so gewählt wird, dass die Abweichung des "Ist-Umsatzes" vom "Soll-Umsatz" bevorzugt im Bereich von 0 bis 10%, bevorzugt von 0 bis 7,5% und besonders bevorzugt von 0 bis 5% liegt. Vorzugsweise gilt diese Vorgabe ab einer Siloxandosagemenge von 10% der zu dosierenden Gesamtmenge und besonders bevorzugt ab 5% der zu dosierenden Gesamtmenge. Der Fachmann kann durch einfache Handversuche auf diese Weise rasch eine optimale Siloxan-Dosiergeschwindigkeit einstellen und somit eine optimal kontrollierte Wasserstoffentwicklung realisieren.

### Beispiel 1 (erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 282,1 g eines getrockneten Polyoxyalkylendiols mit einem Wassergehalt von <0,02% vorgelegt. Das Polyoxyalkylendiol mit einem mittleren Molgewicht von 2.800 g/mol (bestimmt über OH-Zahl) und einem Ethylenoxid/Propylenoxid-Verhältnis von ca. 1:1 wird mit 378,0 g eines linearen Alkylbenzols mit einem Siedebereich von ca. 240 bis 314°C vereinigt. Das Gemisch wird auf eine Temperatur von 105°C erhitzt. Nun werden 179,0 mg Tris(pentafluorophenyl)boran (450 ppm bezogen auf die Gesamtmenge der Reaktanden), gelöst in 20 g des oben beschriebenen Alkylbenzols hinzugegeben Nach einer Einrührzeit von 5 Minuten werden 115,6 g eines α,ω-Wasserstoffsiloxans (mittlere Kettenlänge N=15, d. h. bestehend aus 15 Si-Einheiten) im equimolaren Verhältnis zum eingesetzten Polyoxyalkylendiol dosiert. Die Dosiermenge und - geschwindigkeit wird mittels einer programmiergesteuerten Peristaltikpumpe so eingestellt, dass die Gesamtmenge des Wasserstoffsiloxans in etwa 18 Einzelintervallen je 6,4 g aufgeteilt wird. Nach der eigentlichen Dosierdauer von 1 Minute folgt sofort eine Dosierpause von 8 Minuten. Dieser Vorgang wiederholt sich für alle 18 Intervalle in gleicher Art. Nach Zugabe der stöchiometrischen Siloxanmenge wird ein deutlicher Viskositätsanstieg beobachtet. Das Ende der Reaktion lässt sich eindeutig an der nachlassenden Gasentwicklung feststellen. Gasvolumetrische SiH-Bestimmung belegt einen vollständigen Umsatz. Es wird ein farbloses hochviskoses Produkt erhalten mit einer Viskosität von 330.000 mPa s sowie einem gewichtsmittleren Molekulargewicht von M_{w} 105.000 g/mol und einem PDI von 2,24.

### Beispiel 2 (erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 278,3 g eines getrockneten Polyoxyalkylendiols mit einem Wassergehalt von <0,02% vorgelegt. Das Polyoxyalkylendiol mit einem mittleren Molgewicht von 2.800 g/mol (bestimmt über OH-Zahl) und einem Ethylenoxid/Propylenoxid-Verhältnis von ca. 1:1 wird mit 194,0 g eines linearen Alkylbenzols mit einem Siedebereich von ca. 240 bis 314°C vereinigt. Das Gemisch wird auf eine Temperatur von 105°C erhitzt. Nun werden 260,0 mg Tris(pentafluorophenyl)boran (670 ppm bezogen auf die Gesamtmenge der Reaktanden), gelöst 20 g des oben beschriebenen Alkylbenzols hinzugegeben Nach einer Einrührzeit von 5 Minuten werden 300,0 g einer Mischung aus einem α,ω-Wasserstoffsiloxan (mittlere Kettenlänge N=15, d. h. bestehend aus 15 Si-Einheiten) und einem linearen Alkylbenzol mit einem Siloxan-Anteil von 36,5 Gew.-% im equimolaren Verhältnis zum eingesetzten Polyoxyalkylendiol dosiert. Die Dosiermenge und -geschwindigkeit wird mittels einer programmiergesteuerten Peristaltikpumpe so eingestellt, dass die Gesamtmenge der Dosiermischung in etwa 18 Einzelintervallen je 16,7 g aufgeteilt wird. Nach der eigentlichen Dosierdauer von 2 Minuten folgt sofort eine Dosierpause von 10 Minuten. Dieser Vorgang wiederholt sich für alle 18 Intervalle in gleicher Art. Nach Zugabe der stöchiometrischen Siloxanmenge wird ein deutlicher Viskositätsanstieg beobachtet. Das Ende der Reaktion lässt sich eindeutig an der nachlassenden Gasentwicklung feststellen. Gasvolumetrische SiH-Bestimmung belegt einen vollständigen Umsatz. Es wird ein farbloses hochviskoses Produkt erhalten mit einer Viskosität von 45.600 mPa s.

### Beispiel 3 (erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 282,1 g eines getrockneten Polyoxyalkylendiols mit einem Wassergehalt von <0,02% vorgelegt. Das Polyoxyalkylendiol mit einem mittlerenMolgewicht von 2.800 g/mol (bestimmt über OH-Zahl) und einem Ethylenoxid/Propylenoxid-Verhältnis von ca. 1:1 wird mit 378,0 g eines linearen Alkylbenzols mit einem Siedebereich von ca. 240 bis 314°C vereinigt. Das Gemisch wird auf eine Temperatur von 105°C erhitzt. Nun werden 218,7 mg Tris(pentafluorophenyl)boran (550 ppm bezogen auf die Gesamtmenge der Reaktanden), gelöst in 20 g des oben beschriebenen Alkylbenzols hinzugegeben Nach einer Einrührzeit von 5 Minuten werden 115,6 g eines α,ω-Wasserstoffsiloxans (mittlere Kettenlänge N=15, d. h. bestehend aus 15 Si-Einheiten) im equimolaren Verhältnis zum eingesetzten Polyoxyalkylendiol dosiert. Die Dosiermenge und - geschwindigkeit wird mittels einer programmiergesteuerten Peristaltikpumpe so eingestellt, dass die Gesamtmenge des Wasserstoffsiloxans kontinuierlich innerhalb von 245 Minuten zudosiert wird. Nach Zugabe der stöchiometrischen Siloxanmenge wird ein deutlicher Viskositätsanstieg beobachtet. Das Ende der Reaktion lässt sich eindeutig an der nachlassenden Gasentwicklung feststellen. Gasvolumetrische SiH-Bestimmung belegt einen vollständigen Umsatz. Es wird ein farbloses hochviskoses Produkt erhalten mit einer Viskosität von 250.000 mPa s sowie einem gewichtsmittleren Molekulargewicht von M_{w} 161.000 g/mol und einem PDI von 2,89.

### Beispiel 4 (nicht erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 282,1 g eines getrockneten Polyoxyalkylendiols mit einem Wassergehalt von <0,02% vorgelegt. Das Polyoxyalkylendiol mit einem mittleren Molgewicht von 2.800 g/mol (bestimmt über OH-Zahl) und einem Ethylenoxid/Propylenoxid-Verhältnis von ca. 1:1 wird mit 178,6 g eines linearen Alkylbenzols mit einem Siedebereich von ca. 240 bis 314°C vereinigt. Das Gemisch wird auf eine Temperatur von 105°C erhitzt. Nun werden 268,0 mg Tris(pentafluorophenyl)boran (675 ppm bezogen auf die Gesamtmenge der Reaktanden), gelöst in 20 g des oben beschriebenen Alkylbenzols hinzugegeben Nach einer Einrührzeit von 5 Minuten werden 315,0 g einer Mischung aus einem α,ω-Wasserstoffsiloxan (mittlere Kettenlänge N=15, d. h. bestehend aus 15 Si-Einheiten) und einem linearen Alkylbenzol mit einem Siloxan-Anteil von 36,5 Gew.-% im equimolaren Verhältnis zum eingesetzten Polyoxyalkylendiol dosiert. Die Dosiermenge und -geschwindigkeit wird mittels einer programmiergesteuerten Peristaltikpumpe so eingestellt, dass die Gesamtmenge der Dosiermischung in etwa 9 Einzelintervallen je 35,0 g aufgeteilt wird. Nach der eigentlichen Dosierdauer von 1 Minute folgt sofort eine Dosierpause von 10 Minuten. Dieser Vorgang wiederholt sich für alle 9 Intervalle in gleicher Art. Nach Zugabe der stöchiometrischen Siloxanmenge wird ein deutlicher Viskositätsanstieg beobachtet. Das Ende der Reaktion lässt sich eindeutig an der nachlassenden Gasentwicklung feststellen. Gasvolumetrische SiH-Bestimmung belegt einen vollständigen Umsatz. Es wird ein farbloses viskoses Produkt erhalten mit einer Viskosität von 11.500 mPa s.

### Beispiel 5 (nicht erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 176,7 g eines getrockneten Polyoxyalkylendiols mit einem Wassergehalt von <0,02% vorgelegt. Das Polyoxyalkylendiol mit einem mittleren Molgewicht von 2.800 g/mol (bestimmt über OH-Zahl) und einem Ethylenoxid/Propylenoxid-Verhältnis von ca. 1:1 wird mit 258,2 g eines linearen Alkylbenzols mit einem Siedebereich von ca. 240 bis 314°C vereinigt. Das Gemisch wird auf eine Temperatur von 105°C erhitzt. Nun werden 231,4 mg Tris(pentafluorophenyl)boran (521 ppm bezogen auf die Gesamtmenge der Reaktanden), gelöst in 20 g des oben beschriebenen Alkylbenzols hinzugegeben Nach einer Einrührzeit von 5 Minuten werden 101,5 g eines α,ω-Wasserstoffsiloxans (mittlere Kettenlänge N=15, d. h. bestehend aus 15 Si-Einheiten) im Überschuss Verhältnis von 1,45:1,0 zum eingesetzten Polyoxyalkylendiol dosiert. Die Dosiermenge und -geschwindigkeit wird mittels einer programmiergesteuerten Peristaltikpumpe so eingestellt, dass die Gesamtmenge des Wasserstoffsiloxans kontinuierlich innerhalb von 40 Minuten zudosiert wird. Nach Zugabe der stöchiometrischen Siloxanmenge wird ein deutlicher Viskositätsanstieg beobachtet. Ab dem Zeitpunkt, an dem der Siloxan Überschuss dem System zugefügt wird ist eine Viskositätsabnahme mit gleichzeitiger Eintrübung des Produktes festzustellen. Ebenso ist auch ab diesem Zeitpunkt die Gasentwicklung deutlich reduziert. Gasvolumetrische SiH-Bestimmung belegt einen Umsatz von 100% bezogen auf die eingesetzte Siloxan Masse. Es wird ein leicht trübes Produkt erhalten mit einer Viskosität von 1300 mPa s sowie einem gewichtsmittleren Molekulargewicht von M_{w} 58.000 g/mol. und einem PDI von 3,55.

### Beispiel 6 (erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 176,7 g eines getrockneten Polyoxyalkylendiols mit einem Wassergehalt von <0,02% vorgelegt. Das Polyoxyalkylendiol mit einem mittleren Molgewicht von 2.800 g/mol (bestimmt über OH-Zahl) und einem Ethylenoxid/Propylenoxid-Verhältnis von ca. 1:1 wird mit 226,7 g eines linearen Alkylbenzols mit einem Siedebereich von ca. 240 bis 314°C vereinigt. Das Gemisch wird auf eine Temperatur von 105°C erhitzt. Nun werden 160,0 mg Tris(pentafluorophenyl)boran (650 ppm bezogen auf die Gesamtmenge der Reaktanden), gelöst in 20 g des oben beschriebenen Alkylbenzols hinzugegeben Nach einer Einrührzeit von 5 Minuten werden 70,0 g eines α,ω-Wasserstoffsiloxans (mittlere Kettenlänge N=15, d. h. bestehend aus 15 Si-Einheiten) im equimolaren Verhältnis zum eingesetzten Polyoxyalkylendiol dosiert. Die Dosiermenge und - geschwindigkeit wird mittels einer programmiergesteuerten Peristaltikpumpe so eingestellt, dass die Gesamtmenge des Wasserstoffsiloxans kontinuierlich innerhalb von 190 Minuten zudosiert wird. Nach Zugabe der stöchiometrischen Siloxanmenge wird ein deutlicher Viskositätsanstieg beobachtet. Das Ende der Reaktion lässt sich eindeutig an der nachlassenden Gasentwicklung feststellen. Gasvolumetrische SiH-Bestimmung belegt einen vollständigen Umsatz. Es wird ein farbloses hochviskoses Produkt erhalten mit einer Viskosität von 125.000 mPa s sowie einem gewichtsmittleren Molekulargewicht von M_{w} 183.500 g/mol und einem PDI von 4,58.

### Beispiel 7 (nicht erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 176,7 g eines getrockneten Polyoxyalkylendiols mit einem Wassergehalt von <0,02% vorgelegt. Das Polyoxyalkylendiol mit einem mittleren Molgewicht von 2.800 g/mol (bestimmt über OH-Zahl) und einem Ethylenoxid/Propylenoxid-Verhältnis von ca. 1:1 wird mit 226,7 g eines linearen Alkylbenzols mit einem Siedebereich von ca. 240 bis 314°C vereinigt. Das Gemisch wird auf eine Temperatur von 105°C erhitzt. Nun werden 160,0 mg Tris(pentafluorophenyl)boran (650 ppm bezogen auf die Gesamtmenge der Reaktanden), gelöst in 20 g des oben beschriebenen Alkylbenzols hinzugegeben Nach einer Einrührzeit von 5 Minuten werden 70,0 g eines α,ω-Wasserstoffsiloxans (mittlere Kettenlänge N=15, d. h. bestehend aus 15 Si-Einheiten) im equimolaren Verhältnis zum eingesetzten Polyoxyalkylendiol dosiert. Die Dosiermenge und - geschwindigkeit wird mittels einer programmiergesteuerten Peristaltikpumpe so eingestellt, dass die Gesamtmenge des Wasserstoffsiloxans kontinuierlich innerhalb von 25 Minuten zudosiert wird. Nach Zugabe der stöchiometrischen Siloxanmenge wird ein deutlicher Viskositätsanstieg beobachtet. Das Ende der Reaktion lässt sich eindeutig an der nachlassenden Gasentwicklung feststellen. Gasvolumetrische SiH-Bestimmung belegt einen vollständigen Umsatz. Es wird ein farbloses hochviskoses Produkt erhalten mit einer Viskosität von 77.000 mPa s sowie einem gewichtsmittleren Molekulargewicht von M_{w} 144.900 g/mol und einem PDI von 3,41.

### Beispiel 8 (erfindungsgemäß):

In einem 1000-ml-Planschliff-Vierhalskolben, ausgerüstet mit Edelstahl Sigma-Rührer^{®}, Dosiereinheit mit Peristaltikpumpe, Innenthermometer, Rückflusskühler mit Gasableitungsschlauch, werden 176,7 g eines getrockneten Polyoxyalkylendiols mit einem Wassergehalt von <0,02% vorgelegt. Das Polyoxyalkylendiol mit einem mittleren Molgewicht von 2.800 g/mol (bestimmt über OH-Zahl) und einem Ethylenoxid/Propylenoxid-Verhältnis von ca. 1:1 wird mit 226,7 g eines linearen Alkylbenzols mit einem Siedebereich von ca. 240 bis 314°C vereinigt. Das Gemisch wird auf eine Temperatur von 105°C erhitzt. Nun werden 160,0 mg Tris(pentafluorophenyl)boran (650 ppm bezogen auf die Gesamtmenge der Reaktanden), gelöst in 20 g des oben beschriebenen Alkylbenzols hinzugegeben Nach einer Einrührzeit von 5 Minuten werden 70,0 g eines α,ω-Wasserstoffsiloxans (mittlere Kettenlänge N=15, d. h. bestehend aus 15 Si-Einheiten) im equimolaren Verhältnis zum eingesetzten Polyoxyalkylendiol dosiert. Die Dosiermenge und - geschwindigkeit wird mittels einer programmiergesteuerten Peristaltikpumpe so eingestellt, dass die Gesamtmenge des Wasserstoffsiloxans in etwa 11 Einzelintervallen je 6,4 g aufgeteilt wird. Nach der eigentlichen Dosierdauer von 12 Minuten folgt sofort eine Dosierpause von 3 Minuten. Dieser Vorgang wiederholt sich für alle 11 Intervalle in gleicher Art. Nach Zugabe der stöchiometrischen Siloxanmenge wird ein deutlicher Viskositätsanstieg beobachtet. Das Ende der Reaktion lässt sich eindeutig an der nachlassenden Gasentwicklung feststellen. Gasvolumetrische SiH-Bestimmung belegt einen vollständigen Umsatz. Es wird ein farbloses hochviskoses Produkt erhalten mit einer Viskosität von 79.000 mPa s sowie einem gewichtsmittleren Molekulargewicht von M_{w} 131.200 g/mol und einem PDI von 3,23.

### Zu den Abbildungen FIG 1 bis FIG 4

Die Abbildungen FIG 1 bis FIG 4 veranschaulichen die Beispiele 6 bis 8 der Erfindung. In den Abbildungen FIG1 bis FIG 3 ist jeweils das freiwerdende Wasserstoffvolumen in Abhängigkeit der zudosierten Wasserstoffsiloxanmenge für die drei Beispiele 6 bis 8 gezeigt. Die Versuche unterscheiden sich hinsichtlich Dosageart (kontinuierlich oder Intervall) und/oder Dosagegeschwindigkeit wie zuvor beschrieben. Die gestrichelte Linie zeigt jeweils den Soll-Umsatz. Die durchgezogene Linie zeigt jeweils den IST-Umsatz.

In Abbildung FIG 4 ist der Einfluß der Reaktionsführung auf die Abweichung von Soll- zu Ist-Umsatz zusammenfassend gezeigt in Abhängigkeit der dosierten Siloxanmasse für die Beispiele 6 bis 8.

### Polyurethan-Formulierung:

Zur Beurteilung der Wirksamkeit der in den Beispielen 1 - 8 hergestellten Polyether-Siloxan Block-Copolymeren als Stabilisator für die Herstellung von Polyurethan-Schlagschäumen, wurde eine Reihe an Testverschäumungen durchgeführt. Für diese wurde die in Tabelle beschriebene Polyurethanformulierung verwendet:

**Tabelle 1: Übersicht über in Verschäumungsexperimenten verwendete Formulierung.**

| **Polyol** | **Hersteller / Lieferant** | **Zusammensetzung** | **Gewichts-Teile** |
|---|---|---|---|
| Voranol^{®} CP 3322 | Dow | EO/PO-Polyetherpolyol OHZ = 48 mg KOH/g; f ≈ 3 | 140 |
| Voralux^{®} HN 360 | Dow | SAN-Polymer Polyetherpolyol OHZ = 30 mg KOH/g, f ≈ 3 | 60 |
| DPG | Sigma Aldrich | Dipropylenglykol OHZ = 836 mg KOH/g, f = 2 | 30 |
| KOSMOS^{®} N 200 | Evonik | Nickel-(II)-Acetylacetonate Katalysator | 4 |
| Stabilisator | | Aus Beispiel 1 - 8 | 4 |
| Omya^{®} BLS | Omya GmbH | CaCO₃ - Füllstoff | 0 bzw. 230 |
| Suprasec^{®} 6505 | Huntsman | Polymeres MDI NCO-% = 29,3 % | 92 Index = 105 |

### Beispiel 9: Handverschäumungen

Die Wirksamkeit der Polyether-Siloxan Block-Copolymeren als Stabilisator für PU-Schlagschäume wurde zunächst in Handverschäumungen untersucht. Diese wurden mit einem Dissolver, Modell Dispermat^{®} LC75 von der Firma VMA-Getzman, ausgerüstet mit einer Dissolverscheibe, Ø = 6 cm, durchgeführt. Für diese Versuche wurde, die in Tabelle 1 beschriebene Polyolformulierung ohne Füllstoff verwendet. Zunächst Polyole, Stabilisator, Katalysator im entsprechenden Verhältnis in einen 1000 ml Plastikbecher eingewogen und bei ca. 500 rpm für 3 min. zu einer homogenen Mischung verrührt. Anschließend wurde Isocyanat hinzugegeben und die Mischung für 3 min. bei 2200 rpm aufgeschäumt. Hierbei wurde darauf geachtet, dass die Dissolver-Scheibe stets soweit in die Mischung eintauchte, dass eine ordentliche Trombe gebildet wurde. Anschließend wurde die Volumenzunahme des erzeugten Schaums gemessen. Diese wurde als Bewertungskriterium für die Wirksamkeit der Schaumstabilisatoren verwendet. Die gemessenen Werte sind in Tabelle 2 zusammengefasst.

Wie aus dieser Zusammenstellung erkennbar ist, konnten mit den nach dem erfindungsgemäßen Verfahren hergestellte Polydimethylsiloxan-Polyoxyalkylen-Blockcopolymeren deutlich größere Volumenzunahmen erzielt werden; die Polyol-Isocyanat-Mischung konnte folglich deutlich effizienter aufgeschlagen werden.

**Tabelle 2: Resultate der Handverschäumungen**

| **Stabilisator** | **Volumenzunahme Schaum [ml]** |
|---|---|
| Aus erfindungsgemäßem Beispiel 1 | 167 |
| Aus erfindungsgemäßem Beispiel 2 | 158 |
| Aus erfindungsgemäßem Beispiel 3 | 150 |
| Aus nicht-erfindungsgemäßem Beispiel 4 | 67 |
| Aus nicht-erfindungsgemäßem Beispiel 5 | 0 |
| Aus erfindungsgemäßem Beispiel 6 | 133 |
| Aus nicht-erfindungsgemäßem Beispiel 7 | 115 |
| Aus erfindungsgemäßem Beispiel 8 | 133 |

### Beispiel 10: Maschinen-Verschäumungen

Zur weiteren Bewertung der Wirksamkeit der Polyether-Siloxan Block-Copolymeren als Stabilisatoren für PU-Schlagschäume wurden zusätzliche Versuche mit einem vollautomatischen Labor-Schaumgenerator, Typ *Pico-Mix XL* von der Firma *Hansa-Mixer,* ausgerüstet mit 2 separaten Exzenterschnecken-Trichterpumpen, durchgeführt. Für diese Versuche wurde, die in Tabelle 1 beschriebene Polyolformulierung diesmal mit Füllstoff verwendet. Zunächst wurde eine Vormischung (Ansatzgröße ca. 5 kg) aus Polyolen, Stabilisator, Katalysator und Calcium-Carbonat hergestellt und anschließend in eine der beiden Trichterpumpen des Schaumgenerators gefüllt. Die andere Trichterpumpe wurde mit der Isocyanat-Komponente befüllt. Für Verschäumungsexperimente wurden Polyol-Vormischung und Isocyanat gleichzeitig in den Mischkopf des Schaumgenerators eingedüst und dort durch gleichzeitiges Einleiten von Luft aufgeschäumt. Der Mischkopf wurde hierbei bei allen Experimenten bei 850 rpm betrieben. Die Förderleistungen der beiden Trichterpumpen wurde stets so eingestellt, dass Polyol und Isocyanat im passenden Verhältnis (entsprechend dem NCO-Index der Formulierung) in den Mischkopf eingedüst wurden, der Gesamtmassenfluss betrug 9 kg/h. Der Luftstrom in den Mischkopf wurde so gewählt, dass nach dem Aufschäumen Schaumdichten von 250 und 300 g/l erhalten wurden. Die Homogenität und Stabilität des erhaltenen Schaums nach Austritt aus dem Mischkopf war ein Bewertungskriterium für die Wirksamkeit des Schaumstabilisators. Die aufgeschäumte Reaktionsmischung wurde anschließend mit einem Labor-Streichtisch / -Trockner, *Labcoater LTE-S* von der Firma *Mathis AG,* auf ein beschichtetes Trennpapier gestrichen (Schichtstärke 6 mm) und für 15 min. bei 120 °C ausgehärtet. Zellstruktur und Zellhomogenität des ausgehärteten Schaums waren ein weiteres Bewertungskriterium für die Wirksamkeit des Schaumstabilisators.

Wie aus der Zusammenstellung in Tabelle 3 ersichtlich ist, weisen Schäume, welche nach dem erfindungsgemäßen Verfahren hergestellte Polydimethylsiloxan-Polyoxyalkylen-Blockcopolymere enthalten, eine verbesserte Schaumstabilität sowie eine feinere und homogenere Zellstruktur auf. Im Gegensatz hierzu ergaben die nicht erfindungsgemäßen Stabilisatoren recht grobe und irreguläre Schäume, mit verminderter Stabilität, was sich z.B. durch Zellvergröberung beim Aushärten der Schäume zeigte. Insbesondere ist festzuhalten, dass der nicht erfindungsgemäße Stabilisator aus Bespiel 5 erst gar nicht die Herstellung von Schlagschäumen im gewünschten Dichtebereich zuließ. So konnte in diesem Fall ein vollständiger Schaumkollapse direkt nach Austritt aus dem Mischkopf beobachtet werden. Nach Aushärtung wurde eine kompakte Masse erhalten, die lediglich einige wenige grobe Lufteinschlüsse aufwies. Die Verschäumungsergebnisse belegen somit eindeutig die verbesserte Wirksamkeit der über das erfindungsgemäße Verfahren hergestellten Schaumstabilisatoren.

**Tabelle 3: Resultate von Maschinen-Verschäumungen (Bewertung von - - = sehr schlecht, über o = mittel bis ++ = sehr gut)**

| | **250 g/l** | **300 g/l** |
|---|---|---|
| **Polydimethylsiloxan-Polyoxyalkylen-Blockcopolymer (erfindungsgemäßes Beispiel 1)** | | |
| Schaumstabilität | + | ++ |
| Schaumhomogenität | ++ | ++ |

| **Polydimethylsiloxan-Polyoxyalkylen-Blockcopolymer (erfindungsgemäßes Beispiel 2)** | | |
|---|---|---|
| Schaumstabilität | + | ++ |
| Schaumhomogenität | + | ++ |

| **Polydimethylsiloxan-Polyoxyalkylen-Blockcopolymer (erfindungsgemäßes Beispiel 3)** | | |
|---|---|---|
| Schaumstabilität | ++ | + |
| Schaumhomogenität | + | ++ |

| **Polydimethylsiloxan-Polyoxyalkylen-Blockcopolymer (nicht-erfindungsgemäßes Beispiel 4)** | | |
|---|---|---|
| Schaumstabilität | -- | - |
| Schaumhomogenität | -- | - |

| **Polydimethylsiloxan-Polyoxyalkylen-Blockcopolymer (nicht-erfindungsgemäßes Beispiel 5)** | | |
|---|---|---|
| Schaumstabilität Schaumhomogenität | Vollständiger Schaumko llaps - Bewertung nicht möglich | |

| **Polydimethylsiloxan-Polyoxyalkylen-Blockcopolymer (erfindungsgemäßes Beispiel 6)** | | |
|---|---|---|
| Schaumhomogenität | + | + |
| Schaumstabilität | + | ++ |

| **Polydimethylsiloxan-Polyoxyalkylen-Blockcopolymer (nicht-erfindungsgemäßes Beispiel 7)** | | |
|---|---|---|
| Schaumstabilität | - | ○ |
| Schaumhomogenität | - | ○ |

| **Polydimethylsiloxan-Polyoxyalkylen-Blockcopolymer (erfindungsgemäßes Beispiel 8)** | | |
|---|---|---|
| Schaumstabilität | + | ++ |
| Schaumhomogenität | + | + |

## Patentansprüche

1. Verfahren zur Herstellung von SiOC-verknüpften, linearen Polydialkylsiloxan-Polyoxyalkylen-Blockcopolymeren mit sich wiederholenden (AB)-Einheiten umfassend die Umsetzung eines linearen, α,ω-(SiH)-funktionellen Polydialkylsiloxans (a) mit einem linearen, α,ω-(OH)-funktionellen Polyoxyalkylen (b),
unter Einsatz einer oder mehrerer Elementverbindungen der III. Haupt- und/oder 3. Nebengruppe als Katalysator (c), optional in Anwesenheit eines Lösungsmittels (d),
**dadurch gekennzeichnet, dass** die beiden Reaktanden (a) und (b) bevorzugt in equimolaren Mengen und unter kontrollierter Wasserstoffentwicklung bis zum quantitativen SiH-Umsatz umgesetzt werden.

2. Verfahren gemäß Anspruch 1, dadurch gekenntzeichnet, dass das lineare α,ω-(SiH)-funktionelle Polydialkylsiloxan der allgmeinen Formel (I) genügt:
M' - Da - M' Formel (I)
wobei
M' = [HR¹₂SiO_{1/2}]
D = [R¹₂SiO_{2/2}]
a = 8 - 100, bevorzugt 10 - 60, insbesondere bevorzugt 12 - 40,
R¹ = unabhängig voneinander gleiche oder verschiedene Kohlenwasserstoffreste mit 1 - 20 Kohlenstoffatomen, bevorzugt Methyl, Ethyl, Propyl oder Butyl, insbesondere bevorzugt Methyl.

3. Verfahren nach einem der der Ansprüche 1 oder 2, **dadurch gekennzeichnet, dass** das lineare α,ω-(OH)-funktionelle Polyoxyalkylen der Formel (II) genügt:
HO-(CₙH₍₂ₙ₋ₘ₎R²ₘO-)_{b}-H Formel (II)
b = 1 - 200, bevorzugt 10- 100, insbesondere bevorzugt 25 - 60,
n = 2-4,
m = 0 oder 1,
R² = unabhängig voneinander gleiche oder verschiedene Kohlenwasserstoffreste mit 1 - 12 Kohlenstoffatomen, bevorzugt Methyl, Ethyl, Propyl oder Butyl, insbesondere bevorzugt Methyl oder Ethyl.

4. Verfahren nach einem der Ansprüche 1 bis 3, **dadurch gekennzeichnet, dass** die Oxyalkyleneinheiten im linearen α,ω-(OH)-funktionellen Polyoxyalkylen im Wesentlichen aus Oxyethyleneinheiten und/oder Oxypropyleneinheiten bestehen, bevorzugt sind gemischte Oxyethylen- und Oxypropyleneinheiten insbesondere mit einem Oxyethylenanteil von 25 bis 70 Gew.-% und 70 bis 25 Gew.-% Oxypropylenanteil, bezogen auf den Gesamtgehalt an Oxyalkyleneinheiten.

5. Verfahren nach einem der Ansprüche 1 bis 4, **dadurch gekennzeichnet, dass** das molare Verhältnis der beiden Reaktanden (a) zu (b) im Bereich von 0,9 bis 1,10, bevorzugt 0,98 bis 1,02 liegt, insbesondere 1 zu 1 beträgt.

6. Verfahren nach einem der Ansprüche 1 bis 5, **dadurch gekennzeichnet, dass** es in Anwesenheit von Lösungsmittel ausgeführt wird, wobei den Reaktanden (a) und/oder (b) Lösemittel zugesetzt wird, wobei der gesamte Lösemittelanteil bezogen auf die Gesamtmenge der Reaktanden (a), (b) und Lösemittel bevorzugt zwischen 40 Gew.-% und 70 Gew.-% Lösungsmittel, insbesondere zwischen 50 Gew.-% und 65 Gew.-% liegt.

7. Verfahren nach einem der Ansprüche 1 bis 6 **dadurch gekennzeichnet, dass** die Umsetzung der Reaktanden (a) und (b) so erfolgt, dass Reaktand (b) vorgelegt wird und Reaktand (a) zudosiert wird, wobei die Zudosierung kontinuierlich oder Intervall-artig durchgeführt wird,
insbesondere wie folgt:
(i) Reaktand (b) wird auf Reaktionstemperatur aufgeheizt, Katalysator zugesetzt und durchmischt, danach wird Reaktand (a) unter kontrollierter Wasserstoffentwicklung zudosiert,
(ii) Reaktand (b) wird auf Reaktionstemperatur aufgeheizt, Katalysator zugesetzt und durchmischt, danach wird Reaktand (a), verdünnt mit Lösungsmittel, unter kontrollierter Wasserstoffentwicklung zudosiert,
(iii) Reaktand (b) wird auf Reaktionstemperatur aufgeheizt, mit Lösungsmittel verdünnt und der Katalysator zugesetzt und durchmischt, danach wird Reaktand (a) unter kontrollierter Wasserstoffentwicklung zudosiert,
oder
(iv) Reaktand (b) wird auf Reaktionstemperatur aufgeheizt, mit Lösungsmittel verdünnt und der Katalysator zugesetzt und durchmischt, danach wird Reaktand (a), verdünnt mit Lösungsmittel, unter kontrollierter Wasserstoffentwicklung zudosiert.

8. Verfahren nach einem der Ansprüche 1 bis 7, **dadurch gekennzeichnet, dass** die Reaktionstemperatur zur Herstellung der SiOC-verknüpften, linearen Polydialkylsiloxan-Polyoxyalkylen-Blockcopolymeren mit sich wiederholenden (AB)-Einheiten im Bereich von 60°C bis 140°C, insbesondere 100°C bis 120°C liegt.

9. Verfahren nach einem der Ansprüche 1 bis 8, **dadurch gekennzeichnet, dass** man als Elementverbindungen der III. Hauptgruppe einen borhaltigen und/oder aluminiumhaltigen Katalysator und/oder als Elementverbindungen der 3. Nebengruppe einen scandiumhaltigen, yttriumhaltigen, lanthanhaltigen und/oder lanthanoidhaltigen Katalysator einsetzt.

10. Verfahren nach einem der Ansprüche 1 bis 9, **dadurch gekennzeichnet, dass** der Katalysator in Mengen von 0,01 bis 0,2 Gew.-%, vorzugsweise 0,03 bis 0,10 Gew.-%, bezogen auf die Summe der Menge der Reaktanden (a) und (b), eingesetzt wird.

11. Verfahren nach einem der Ansprüche 1 bis 10, **dadurch gekennzeichnet, dass** zur Kontrolle der Wasserstoffentwicklung die Geschwindigkeit der Zugabe der Komponente (a) zu (b) so erfolgt, dass die Abweichung des Ist-Umsatzes vom Soll-Umsatz im Bereich von 0 bis 10%, bevorzugt 0 bis 5% liegt.

12. SiOC-verknüpfte, lineare Polydialkylsiloxan-Polyether-Blockcopolymere mit sich wiederholenden (AB)-Einheiten, hergestellt gemäss einem Verfahren nach einem der Ansprüche 1 bis 11.

13. Blockcopolymer nach Anspruch 12, **dadurch gekennzeichnet, dass** der gesamte Siloxanblockanteil (A) zwischen 20 und 50 Gew.-%, insbesondere 25 bis 30 Gew.-%, und der Anteil der Polyoxyalkylenblöcke (B) zwischen 80 und 50 Gew.-%, bevorzugt 75 bis 70 Gew.-% beträgt, bezogen auf das gesamte Blockcopolymer, wobei das Blockcopolymer vorzugsweise ein mittleres gewichtsgemitteltes Molekulargewicht M_{w} von mindestens 10.000 g/mol bis 250.000 g/mol, vorzugsweise 15.000 g/mol bis 225.000 g/mol, insbesondere 20.000 g/mol bis 200.000 g/mol aufweist, bestimmbar über GPC.

14. Verwendung der SiOC-verknüpften, linearen Polydialkylsiloxan-Polyether-Blockcopolymere mit sich wiederholenden (AB)-Einheiten nach Anspruch 12 oder 13 als grenzflächenaktive Additive zur Herstellung von Polyurethanschäumen, insbesondere zur Herstellung von Polyurethanschlagschäumen.

15. Polyurethanschaum, vorzugsweise Polyurethan-Schlagschaum, hergestellt unter Einsatz von SiOC-verknüpften, linearen Polydialkylsiloxan-Polyether-Blockcopolymeren mit sich wiederholenden (AB)-Einheiten nach Anspruch 12 oder 13.

16. Verwendung eines Polyurethanschaums, vorzugsweise PU-Schlagschaums nach Anspruch 15 zur Herstellung von Bodenbelägen wie Teppichen, Trittschalldämmungen oder Kunstrasen, sowie zur Herstellung von Textilbeschichtungen oder von Dichtungsmaterialien, Gap fillern, Shock-Pads oder Compression-Pads.
